(19) Europäisches Patentamt
European Patent Office
Office européen des brevets

(11) **EP 3 110 234 A1**

(12) **EUROPEAN PATENT APPLICATION**

(43) Date of publication:
**28.12.2016 Bulletin 2016/52**

(51) Int Cl.:
*H05B 33/08* (2006.01)    *H05B 37/02* (2006.01)

(21) Application number: **16157583.2**

(22) Date of filing: **26.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.06.2015 TW 104120343**
**02.12.2015 US 201514956413**

(71) Applicant: **Industrial Technology Research Institute**
**Chutung Hsinchu 31040 (TW)**

(72) Inventors:
• **Tseng, Pei-Ling**
**Miaoli City**
**Miaoli County 360 (TW)**
• **Chien, Tsai-Kan**
**Dounan Township**
**Yunlin County 630 (TW)**
• **Liao, Sue-Chen**
**Taichung City 411 (TW)**

(74) Representative: **Becker Kurig Straus**
**Patentanwälte**
**Bavariastrasse 7**
**80336 München (DE)**

(54) **LIGHTING APPARATUS OF ADJUSTABLE COLOR TEMPERATURE AND A METHOD FOR ADJUSTING COLOR TEMPERATURE THEREOF**

(57)    A lighting apparatus (100) of adjustable color temperature including a luminescent source (110), a controller (120) and a detector (130) is proposed. The controller (120) is coupled to the luminescent source (110). The controller (120) is configured to adjust a color temperature of the illumination source according to at least one of global and local color temperatures (CCT_0, CCT_I). The detector (130) is configured to detect a color temperature of a location of the lighting apparatus of adjustable color temperature, so as to provide the local color temperature (CCT_I) to the controller. The controller may receive said global color temperature (CCT_0) from a cloud database. The controller (120) performs a weighting operation for the global and local color temperatures (CCT_0, CCT_I) to obtain an operation result for adjusting the color temperature of the illumination source. A method for adjusting color temperature of a lighting apparatus of adjustable color temperature is also proposed.

FIG. 2

EP 3 110 234 A1

**Description**

Technical Field

The invention relates to a lighting apparatus of adjustable color temperature and a method for adjusting color temperature thereof.

BACKGROUND

Currently, lighting apparatuses using organic light-emitting diodes as a luminescent source have occupied a large proportion in the consumer market. The lighting apparatuses using the organic light-emitting diodes as the luminescent source are advantageous for having a fabrication material not containing mercury, and capable of providing an illumination source without UV light. In comparison with lighting apparatuses using light-emitting diodes as an illumination source, a less-preferable uniformity of color light may be provided since the light-emitting diode is a spot light source incapable of providing an illumination source with a color temperature approximate to nature light. The organic light-emitting diode is a plane light source with a preferable uniformity of color light and suitable for illumination of nature light. On the other hand, because a brightness of the organic light-emitting diode is proportional to a driving current flowing through the organic light-emitting diode itself, changes in the driving current may also lead to variations in the color temperature of the illumination source. Accordingly, how to adjust the color temperature of the illumination source is important in the case where the brightness of the organic light-emitting diode must remain unchanged.

SUMMARY

The invention is defined in the independent claims. The dependent claims define preferred embodiments. The invention provides a lighting apparatus of adjustable color temperature, in which a color temperature of an illumination source may be adaptively adjusted.
The invention provides a method for adjusting color temperature, which is capable of adaptively adjusting an illumination color temperature of a lighting apparatus.
The lighting apparatus of adjustable color temperature according to the invention includes a luminescent source, a controller and a detector. The luminescent source is configured to provide an illumination source. The controller is coupled to the luminescent source. The controller is configured to adjust a color temperature of the illumination source according to at least one of a global temperature and a local color temperature. The detector is coupled to the controller. The detector is configured to detect a color temperature of a location of the lighting apparatus, so as to provide the local color temperature to the controller. The controller performs a weighting operation for the global temperature and the local color temperature to obtain an operation result for adjusting the color temperature of the illumination source.
The method for adjusting color temperature according to the invention is configured to adjust a color temperature of an illumination source provided by a lighting apparatus of adjustable color temperature. The method for adjusting color temperature includes: receiving a global color temperature from a cloud database; detecting a color temperature of a location of the lighting apparatus of adjustable color temperature by a detector to obtain a local color temperature; and adjusting the color temperature of the illumination source according to at least one of the global color temperature and the local color temperature, The step of adjusting the color temperature of the illumination source according to the at least one of the global color temperature and the local color temperature includes: performing a weighting operation for the global color temperature and the local color temperature to obtain an operation result for adjusting the color temperature of the illumination source.
Based on the above, according to the exemplary embodiments of the invention, the controller of the lighting apparatus of adjustable color temperature may perform the weighting operation for the global color temperature and the local color temperature to obtain the operation result for adjusting the color temperature of the illumination source.
To make the above features and advantages of the invention more comprehensible, several embodiments accompanied with drawings are described in detail as follows.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 illustrates a schematic diagram of a lighting apparatus of adjustable color temperature receiving data from a cloud database according to an exemplary embodiment of the invention.

FIG. 2 illustrates a function block diagram of the lighting apparatus of adjustable color temperature according to an exemplary embodiment of the invention.

FIG. 3 is a flowchart illustrating steps of a method for adjusting color temperature according to an exemplary embodiment of the invention.

FIG. 4 is a flowchart illustrating steps of a method for adjusting color temperature according to another exemplary embodiment of the invention.

FIG. 5 is a flowchart illustrating steps of a method for adjusting color temperature according to another exemplary embodiment of the invention.

FIG. 6 is a flowchart illustrating steps of a method for adjusting color temperature according to another exemplary embodiment of the invention.

FIG. 7 illustrates a schematic diagram of a color temperature compensation circuit according to an exemplary embodiment of the invention.

FIG. 8 illustrates a schematic diagram of a color temperature compensation circuit according to another exemplary embodiment of the invention.

FIG. 9 illustrates a schematic diagram of a color temperature compensation circuit according to another exemplary embodiment of the invention.

FIG. 10 illustrates a schematic diagram of a color temperature compensation circuit according to another exemplary embodiment of the invention.

FIG. 11 illustrates a schematic diagram of a color temperature compensation circuit according to another exemplary embodiment of the invention.

FIG. 12 illustrates a schematic diagram of a color temperature compensation circuit according to another exemplary embodiment of the invention.

FIG. 13 illustrates a schematic diagram of a color temperature compensation circuit according to another exemplary embodiment of the invention.

FIG. 14 illustrates a schematic diagram of a color temperature compensation circuit according to another exemplary embodiment of the invention.

## DETAILED DESCRIPTION

In the following detailed description, for purposes of explanation, numerous specific details are set forth to provide a thorough understanding of the disclosed embodiments. It will be apparent, however, that one or more embodiments may be practiced without these specific details. In other instances, well-known structures and devices are schematically shown to simplify the drawing.

Embodiments are provided below to describe the invention in detail, though the invention is not limited to the provided embodiments, and the provided embodiments can be suitably combined. The term "coupling/coupled" used in this specification (including claims) may refer to any direct or indirect connection means. For example, "a first device is coupled to a second device" should be interpreted as "the first device is directly connected to the second device" or "the first device is indirectly connected to the second device through other devices or connection means." In addition, the term "signal" can mean a current, a voltage, a charge, a temperature, data or any one or multiple signals.

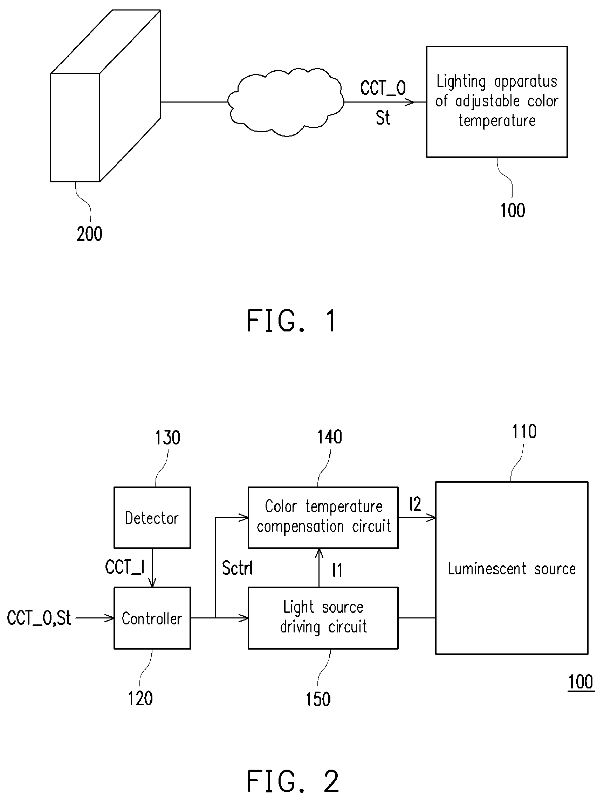

FIG. 1 illustrates a schematic diagram of a lighting apparatus of adjustable color temperature receiving data from a cloud database according to an exemplary embodiment of the invention. FIG. 2 illustrates a function block diagram of the lighting apparatus of adjustable color temperature according to an exemplary embodiment of the invention. Referring to FIG. 1 and FIG. 2, a lighting apparatus 100 of adjustable color temperature includes a luminescent source 110, a controller 120, a detector 130, a color temperature compensation circuit 140 and a light source driving circuit 150. The luminescent source 110 includes one or more organic light-emitting diodes (not illustrated). For example, the organic light-emitting diodes are arranged in series to form a plurality of light-emitting diode strings, and the light-emitting diode strings are arranged in parallel to from a light-emitting diode array. The light source driving circuit 150 is coupled to the color temperature compensation circuit 140. The light source driving circuit 150 is configured to output a driving current I1 to the color temperature compensation circuit 140, and use its bypass current (i.e., a driving current I2) to drive the light-emitting diode array to provide an illumination source. In the exemplary embodiment, the illumination source provided by the luminescent source 110 is a plane light source with uniform color light.

In the exemplary embodiment, the detector 130 is coupled to the controller 120. The detector 130 is configured to detect a background color temperature of a location of the lighting apparatus 100 of adjustable color temperature, so as to provide a local color temperature CCT_I to the controller 120. The lighting apparatus 100 of adjustable color temperature may be disposed outdoor, for example. Accordingly, the local color temperature CCT_I detected by the detector 130 may be, for example, a result combining color temperatures of outdoor sunlight and other ambient light sources. In another embodiment, the lighting apparatus 100 of adjustable color temperature may be disposed indoor, for example. Accordingly, the local color temperature CCT_I detected by the detector 130 may be, for example, a result combining color temperatures of the sunlight irradiated indoor, light sources provided by other lighting apparatuses and other background light sources. The invention is not intended to limit a type of the local color temperature CCT_I, which is mainly used to indicate color temperature information detected by the detector 130.

In the exemplary embodiment, the controller 120 receives data of a global color temperature CCT_O from a cloud database 200, for example. The data of the global color temperature CCT_O is, for example, color temperature data currently or previously observed or recorded by a color temperature measuring institution (e.g., a local bureau of weather) in a specific region, which is stored in the cloud database 200. The data of the global color temperature CCT_O of the one exemplary embodiment includes (but not limited to) historical color temperature previously obtained while, before or after adjusting the color temperature of the lighting apparatus 100 of adjustable color temperature, or current color temperature data obtained while adjusting the color temperature of the lighting apparatus 100 of adjustable color temperature, or future color temperature data predicted according to the stored historical color temperature data and the current color temperature data. In another embodiment, in a scenario where the lighting apparatus 100 of adjustable color temperature is disposed indoor, the current color temperature data is, for example, the result combining color temperatures of outdoor sunlight and other ambient light sources. The invention is not intended to limit a type of the global temperature CCT_O, which is mainly used to indicate color temperature information not detected by the detector 130. Further, in the one exemplary embodiment, the controller 120 may be electrically connected to the cloud database 200 in a wired manner or a wireless manner, which are not particularly limited in the invention. In the exemplary embodiment in which the wireless manner is adopted for the electrical connection, the light apparatus 100 of adjustable color temperature may further include functional elements such as a wireless communication module, so as to establish a communication connection with the cloud database 200 to receive and transmit data.

In the exemplary embodiment, the controller 120 is coupled to the luminescent source 110. The controller 120 is configured to adjust a color temperature of the illumination source according to at least one of the global color temperature CCT_O and the local color temperature CCT_I. For instance, the controller 120 performs a weighting operation for the global color temperature CCT_O and the local color temperature CCT_I to obtain an operation result for adjusting the color temperature of the illumination source. In the exemplary embodiment, for example, the controller 120 performs the weighting operation for the global color temperature CCT_O and the local color temperature CCT_I by using a weighting formula to obtain the operation result. Further, in the exemplary embodiment, the color temperature compensation circuit 140 is coupled to the luminescent source 110 and the controller 120. The color temperature compensation circuit 140 is controlled by the controller 120, and configured to adjust the color temperature of the illumination source, for example. The controller 120 outputs a control signal Sctrl to control the color temperature compensation circuit 140 to adjust the color temperature of the illumination source.

In the exemplary embodiment, the controller 120 is, for example, a central processing unit (CPU) or other programmable microprocessors, a digital signal processor (DSP), a programmable controller, an application specific integrated circuits (ASIC), a programmable logic device (PLD) or other similar apparatuses.

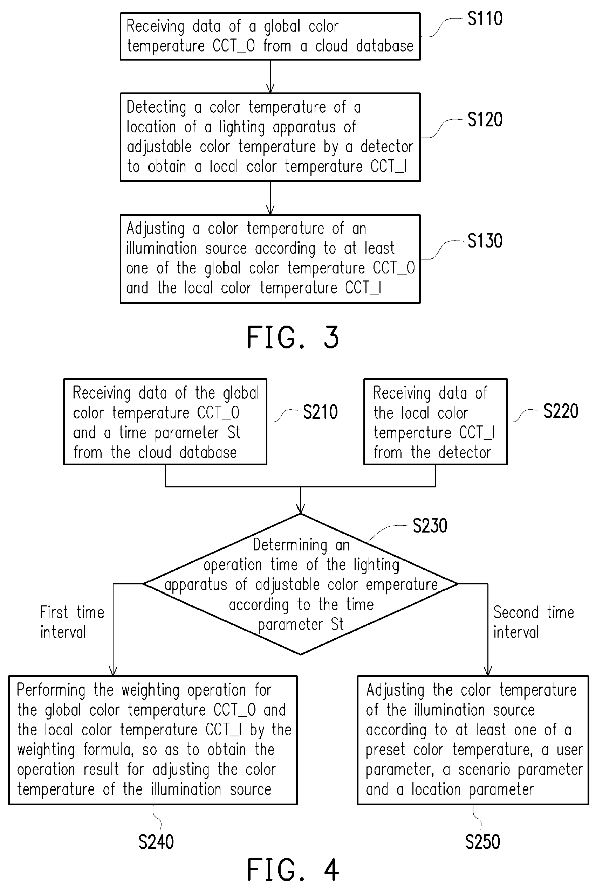

FIG. 3 is a flowchart illustrating steps of a method for adjusting color temperature according to an exemplary embodiment of the invention. Referring to FIG. 1 to FIG. 3 together, for example, the method for adjusting color temperature of the exemplary embodiment may at least be used to adjust the color temperature of the illumination source provided by the lighting apparatus 100 of adjustable color temperature of FIG. 2, but the invention is not limited thereto. The method for adjusting color temperature of the exemplary embodiment may also be applied to other light apparatuses of adjustable color temperature implemented by the same or similar concept.

In the exemplary embodiment, in step S110, the controller 120 receives data of the global color temperature CCT_O from the cloud database 200. In step S120, the controller 120 detects a color temperature of a location of the lighting apparatus 100 of adjustable color temperature by using the detector 130 to obtain the local color temperature CCT_I. In step S130, the controller 120 adjusts the color temperature of the illumination source according to at least one of the global color temperature CCT_O and the local color temperature CCT_I. In the exemplary embodiment, for example, the controller 120 performs a weighting operation for the global color temperature CCT_O and the local color temperature CCT_I to obtain an operation result for adjusting the color temperature of the illumination source in step S130. In the exemplary embodiment, the controller 120 may adjust the color temperature of the illumination source according to both the global color temperature CCT_O and the local color temperature CCT_I. Alternatively, the controller 120 may adjust the color temperature of the illumination source according to the global color temperature CCT_O or the local color temperature CCT_I, which is not particularly limited in the invention.

In addition, sufficient teaching, suggestion, and implementation illustration regarding the method for adjusting color temperature of the present exemplary embodiment may be obtained from the above embodiments depicted in FIG. 1 to FIG. 2, and thus related description thereof is not repeated hereinafter.

FIG. 4 is a flowchart illustrating steps of a method for adjusting color temperature according to another exemplary embodiment of the invention. Referring to FIG. 2 and FIG. 4 together, the method for adjusting color temperature of the exemplary embodiment may at least be used to adjust the color temperature of the illumination source provided by the lighting apparatus 100 of adjustable color temperature of FIG. 2, but the invention is not limited thereto. The method for adjusting color temperature of the exemplary embodiment may also be applied to other light apparatuses of adjustable color temperature implemented by the same or similar concept.

In step S210, the controller 120 receives data of the global color temperature CCT_O and a time parameter St from the cloud database 200, for example. In step S220, the controller 120 receives data of the local color temperature CCT_I from the detector 130, for example. The local color temperature CCT_I is data obtained by the controller 120 after detecting a background color temperature of a current location of the light apparatus 100 of adjustable color temperature by using the detector 130, for example. In the exemplary embodiment, an execution sequence of step S210 and step S220 is simply an example instead of limitations to the invention. The controller 120 may receive the data of the global color temperature CCT_O and the time parameter St first before receiving the data of the local color temperature CCT_I. Alternatively, the controller 120 may also receive the local color temperature CCT_I first before receiving the global color temperature CCT_O and the time parameter St.

In step S230, the controller 120 determines an operation time of the lighting apparatus 100 of adjustable color temperature according to the time parameter St, for example. The controller 120 does not need to receive the data of the time parameter St from the cloud database 200 but determines the operation time of the lighting apparatus 100 of adjustable color temperature according to a built-in time parameter, and the invention is not limited to the above. In the exemplary embodiment, for example, the controller 120 adjusts the color temperature of the illumination source by different methods according to the different operating time of the lighting apparatus 100 of adjustable color temperature. In the exemplary embodiment, when the controller 120 determines that the operation time of the lighting apparatus 100 of adjustable color temperature falls within a first time interval, the controller 120 performs the weighting operation for the global color temperature CCT_O and the local color temperature CCT_I by using the weighting formula, so as to obtain the operation result for adjusting the color temperature of the illumination source in step S240. Alternatively, when the controller 120 determines that the operation time of the lighting apparatus 100 of adjustable color temperature falls within a second time interval, the controller 120 adjusts the color temperature of the illumination source according to at least one of a preset color temperature, a user parameter, a scenario parameter and a location parameter in step S250.

For instance, the first time interval may be, for example, daytime, and the second time interval may be, for example, nighttime. When the lighting apparatus 100 of adjustable color temperature operates in daytime, the controller 120 adjusts the color temperature of the illumination source by the method of step S240, for example. When the lighting apparatus 100 of adjustable color temperature operates in nighttime, the controller 120 adjusts the color temperature of the illumination source by the method of step S250, for example. In the exemplary embodiment, although the operation time is distinguished by daytime and nighttime, but the invention is not limited thereto. The operation time of the lighting apparatus 100 of adjustable color temperature may also be distinguished by any two time periods in one day.

Further, in the exemplary embodiment, the time parameter St received by the controller 120 from the cloud database 200 includes, for example, Greenwich Mean Time (GMT) of the location of the light apparatus 100 of adjustable color temperature, or time information in other standard time format. Based on the different location of the lighting apparatus 100 of adjustable color temperature, time lengths of daytime or nighttime may have a slight fluctuation. The controller 120 may obtain information regarding the slight fluctuation of the time lengths of daytime or nighttime from the time parameter St received from the cloud database 200, so as to adjust the color temperature by different methods. The controller 120 may also obtain the current operation time of the lighting apparatus 100 of adjustable color temperature according to a built-in clock. In this example, the controller 120 does not need to receive the time parameter St from the cloud database 200.

In step S240, the controller 120 performs the weighting operation for the global color temperature CCT_O and the local color temperature CCT_I by using the weighting formula to obtain the operation result for adjusting the color temperature of the illumination source. In the exemplary embodiment, the weighting formula includes, for example, a combination of mathematical operations involving a first weighting function f(O), a second weighting function f(I), the global color temperature CCT_O and the local color temperature CCT_I, as shown below:

$$CCT\_O \times f(O) + CCT\_I \times f(I) \ldots \text{(the weighting formula)}$$

Herein, the first weighting function f(O) is a weight corresponding to the global color temperature CCT_O, and the second weighting function f(I) is a weight corresponding to the local color temperature CCT_I. Afore-mentioned weighting formula indicates that, after calculating a product of the first weighting function f(O) and the global color temperature CCT_O and a product of the second eight function f(I) and the local color temperature CCT_I respectively, the controller 120 calculates a sum of the two products to obtain the operation result.

In the exemplary embodiment, although the mathematical operations in the weighting formula are described by using an arithmetic operation with multiplication and addition, but the invention is not limited thereto. In other embodiments, the mathematical operations may also include other mathematical operations such as other arithmetic operations or matrix operations.

In the exemplary embodiment, the first weighting function f(O) and the second weighting function f(I) may be determined according to at least one of a constant, a color coordinate transformation matrix, a time parameter, a user parameter, a scenario parameter and a location parameter. The parameter for determining the first weighting function f(O) may be identical to or different from the parameter for determining the second weighting function f(I). In the exemplary embodiment, the first weighting function f(O) and the second weighting function f(I) may be correlated or not correlated. Where the first weighting function f(O) and the second weighting function f(I) are correlated, the parameter for determining the first weighting function f(O) may be identical to the parameter for determining the second weighting function f(I). Where the first weighting function f(O) and the second weighting function f(I) are not correlated, the parameter for determining the first weighting function f(O) is different from the parameter for determining the second weighting function f(I), for example.

Alternatively, where the first weighting function f(O) and the second weighting function f(I) are correlated, assuming that the first weighting function f(O) and the second weighting function f(I) are both constant functions and have a sum being 1, when the controller 120 sets the first weighting function f(O) as 0.6, the second weighting function f(I) is corresponding set as 0.4. This example indicates that the controller 120 sets the weighting formula as $CCT\_O \times 0.6 + CCT\_I \times 0.4$. Alternatively, when the controller 120 sets the first weighting function f(O) as 0.35, the second weighting function f(I) is correspondingly set as 0.65. This example indicates that the controller 120 sets the weighting formula as $CCT\_O \times 0.65 + CCT\_I \times 0.35$. In other words, in the exemplary embodiment, the first weighting function f(O) may be determined according to the second weighting function f(I), and the second weighting function f(I) may also be determined according to the first weighting function f(O).

In the exemplary embodiment, the color coordinate transformation matrix may be a transformation matrix for transforming between various color coordinates such as CIE 1931 RGB, CIE 1931 XYZ, CIE 1931 Lxy, CIE 1931 Lu'v', CIE 1976 L*a*b*.

The time parameter is, for example, the operation time of the lighting apparatus 100 of adjustable color temperature. For instance, the operation time of the lighting apparatus 100 of adjustable color temperature may include an interval from the morning to the noon and an interval from the noon to the afternoon. Based on the different operating time, the first weighting function f(O) and the second weighting function f(I) may be adjusted accordingly. The color temperature correspondingly increases with elapse of time in the morning, and the color temperature correspondingly decreases with elapse of time in the afternoon. Based on the above, the lighting apparatus 100 of adjustable color temperature may correspondingly adjust the first weighting function f(O) or the second weighting function f(I).

Further, an exemplary embodiment in which the first weighting function f(O) and the second weighting function f(I) are determined according to a look-up table of the time parameter is shown by Table 1 below:

Table 1

| Time parameter | f(O) | f(I) |
|---|---|---|
| 12:00 p.m. to 7:00 a.m. | The weighting operation is not performed, and instead, the color temperature of the illumination source is adjusted according to at least one of the preset color temperature, the user parameter, the scenario parameter and the location parameter | The weighting operation is not performed, and instead, the color temperature of the illumination source is adjusted according to at least one of the preset color temperature, the user parameter, the scenario parameter and the location parameter |
| 7:00 a.m. to 8:00 a.m. | 0.6 | 0 |
| 8:00 a.m. to 9:00 a.m. | 0.65 | 0 |
| 9:00 a.m. to 1:00 p.m. | 0.7 | 0 |
| 1:00 p.m. to 3:00 p.m. | (1-0.1) | 0 |

(continued)

| Time parameter | f(O) | f(I) |
|---|---|---|
| 3:00 p.m. to 5:00 p.m. | (1-0.3) | 0 |
| 5:00 p.m. to 12:00 p.m. | (1-0.5) | 0 |

As shown in Table 1, in this example, in each of the time periods excluding the time period of 12:00 p.m. to 7:00 a.m., the second weighting function f(I) is set as 0, which indicates that the controller 120 takes in consideration of the influences from the global color temperature CCT_O to the color temperature of the illumination source while performing the weighting operation for the global color temperature CCT_O and the local color temperature CCT_I by using the weighting formula.

The location parameter indicates a location of lighting apparatus 100 of adjustable color temperature, which may be determined based on different latitudes, for example. For instance, the location of the lighting apparatus 100 of adjustable color temperature may locate at the equator zone, the temperate zones or the frigid zones. Based on the different location, the first weighting function f(O) and the second weighting function f(I) may be adjusted accordingly.

Further, an exemplary embodiment in which the first weighting function f(O) and the second weighting function f(I) are determined according to a look-up table of the location parameter is shown by Table 2 below:

Table 2

| Location parameter | | f(O) | f(I) |
|---|---|---|---|
| High latitude | Zone from 66.5 degrees to 90 degrees north and zone from 66.5 degrees to 90 degrees south | 1 | 0 |
| Middle latitude | Zone from 23.5 degrees to 66.5 degrees north and zone from 23.5 degrees to 66.5 degrees south | 1+0.2 | 0 |
| Low latitude | Zone from 23.5 degrees north to 23.5 degrees south | 1+0.4 | 0 |

As shown in Table 2, in this example, each second weighting function f(I) is set as 0, which indicates that the controller 120 takes in consideration of the influences from the global color temperature CCT_O to the color temperature of the illumination source while performing the weighting operation for the global color temperature CCT_O and the local color temperature CCT_I by using the weighting formula.

The user parameter includes, for example, various information of a user such as a lifestyle, a habit, a preference, and the first weighting function f(O) and the second weighting function f(I) may be adjusted according to said various information of the user. For instance, the user may be in a light sleep state at 7 o'clock in the morning so the first weighting function f(O) is set as 0.3 and the second weighting function f(I) is set as 0, for example. The user may have the breakfast at 8 o'clock in the morning so the first weighting function f(O) is set as 0.7 and the second weighting function f(I) is set as 0, for example. For instance, the user may be working at 9 o'clock in the morning so the first weighting function f(O) is set as 1 and the second weighting function f(I) is set as 0, for example. Alternatively, the user may also directly select a specific color temperature as the illumination for the lifestyle.

The scenario parameter includes, for example, information of a usage scenario of the lighting apparatus 100 of adjustable color temperature. For instance, the lighting apparatus 100 of adjustable color temperature may be used in different usage scenarios such as a stage, a theater, an exhibition, and the first weighting function f(O) or the second weighting function f(I) may be adjusted accordingly.

In the exemplary embodiment, for example, the constant, the color coordinate transformation matrix, the time parameter, the user parameter, the scenario parameter and the location parameter may be obtained from the cloud database 200, or stored in the controller 120, or directly inputted into the controller 120 by the user.

On the other hand, in step S250, the controller 120 may adjust the color temperature of the illumination source according to at least one of the preset color temperature, the user parameter, the scenario parameter and the location parameter, for example. For instance, the location parameter indicates the location of lighting apparatus 100 of adjustable color temperature, which may be determined based on different latitudes. For instance, the location of the lighting apparatus 100 of adjustable color temperature may locate at the equator zone, the temperate zones or the frigid zones. Based on the different location, the color temperature of the illumination source may be adjusted accordingly. The user parameter includes, for example, various information of the user such as the lifestyle, the habit, the preference, and the color temperature of the illumination source may be adjusted according to said various information of the user. The scenario parameter includes, for example, information of a usage scenario of the lighting apparatus 100 of adjustable color temperature. For instance, the lighting apparatus 100 of adjustable color temperature may be used in different usage scenarios such as the stage, the theater, the exhibition, and the color temperature of the illumination source may be adjusted accordingly. In the exemplary embodiment, the preset color temperature, the user parameter, the scenario parameter and the location parameter may be, for example, obtained from the cloud database 200, or stored in the controller 120, or directly inputted into the controller 120 by the user.

In addition, sufficient teaching, suggestion, and implementation illustration regarding the method for adjusting color temperature of the exemplary embodiment may be obtained from the above embodiments depicted in FIG. 1 to FIG. 3, and thus related description thereof is not repeated hereinafter.

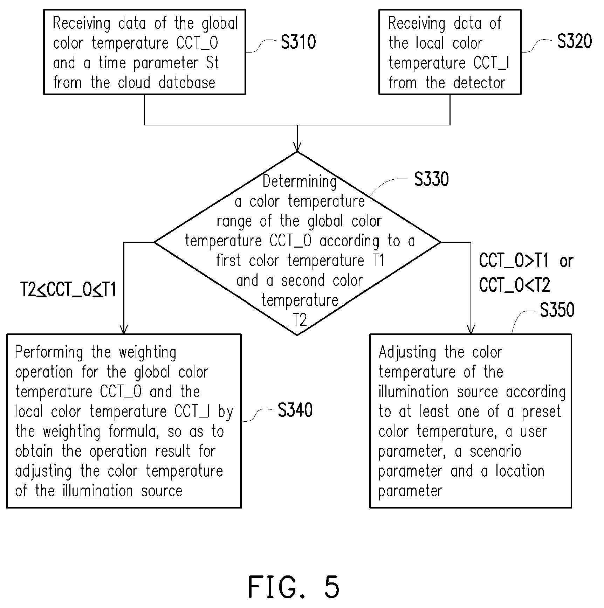

FIG. 5 is a flowchart illustrating steps of a method for adjusting color temperature according to another exemplary embodiment of the invention. Referring to FIG. 2 and FIG. 5 together, a method for adjusting color temperature of the exemplary embodiment is similar to the method for adjusting color temperature of FIG. 4.

According to the exemplary embodiment, in step S330, the controller 120 determines a color temperature range of the global color temperature CCT_O according to a first color temperature T1 and a second color temperature T2, for example. In the exemplary embodiment, for example, the controller 120 adjusts the color temperature of the illumination source by different methods according to the different color temperature range of the global color temperature CCT_0. In the exemplary embodiment, when the controller 120 determines that the global color temperature CCT_O falls between the first color temperature T1 and the second color temperature T2, the controller 120 performs the weighting operation for the global color temperature CCT_O and the local color temperature CCT_I by using the weighting formula, so as to obtain the operation result for adjusting the color temperature of the illumination source in step S340. Alternatively, when the controller 120 determines that the global color temperature CCT_O is greater than the first color temperature T1 or less than the second color temperature T2, the controller 120 adjusts the color temperature of the illumination source according to at least one of a preset color temperature, a user parameter, a scenario parameter and a location parameter in step S350.

In the exemplary embodiment, the first color temperature T1 is greater than the second color temperature T2. The first color temperature T1 and the second color temperature T2 are determined according to the type of color coordinate and the characteristic of the organic light-emitting diodes of the lighting apparatus 100 of adjustable color temperature, for example. In the color coordinate CIE 1932, the first color temperature T1 is, for example, 7000K, and the second color temperature T2 is, for example, 2000K, but the invention is not limited thereto.

In addition, sufficient teaching, suggestion, and implementation illustration regarding the method for adjusting color temperature of the exemplary embodiment may be obtained from the above embodiments depicted in FIG. 1 to FIG. 4, and thus related description thereof is not repeated hereinafter.

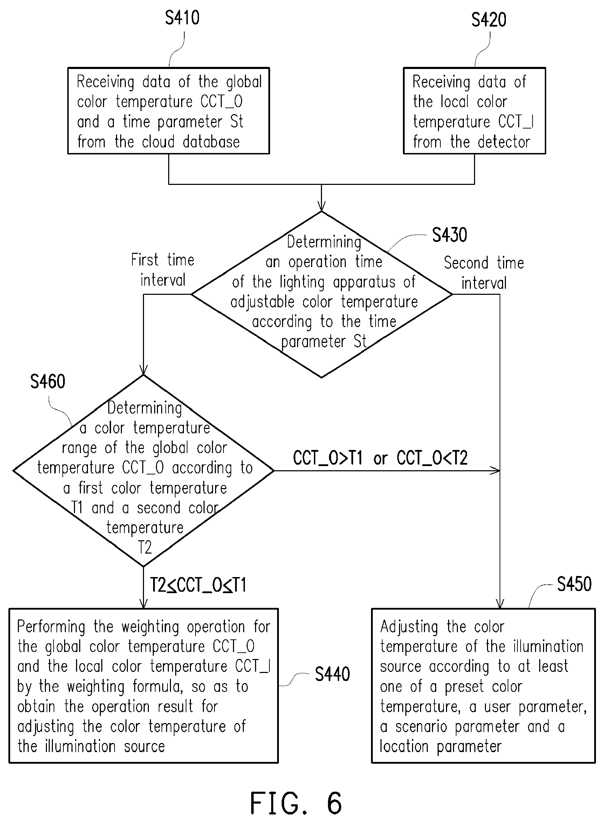

FIG. 6 is a flowchart illustrating steps of a method for adjusting color temperature according to another exemplary embodiment of the invention. Referring to FIG. 2 and FIG. 6 together, a method for adjusting color temperature of the exemplary embodiment is similar to the method for adjusting color temperature of FIG. 4, a major difference between the two is that the method for adjusting color temperature of the exemplary embodiment further includes step S460.

In step S430, the controller 120 determines an operation time of the lighting apparatus 100 of adjustable color temperature according to the time parameter St, for example. In the exemplary embodiment, for example, the controller 120 adjusts the color temperature of the illumination source by different methods according to the different operating time of the lighting apparatus 100 of adjustable color temperature. In the exemplary embodiment, when the controller 120 determines that the operation time of the lighting apparatus 100 of adjustable color temperature falls within a first time interval, the controller 120 determines the color temperature range of the global color temperature CCT_O according to the first color temperature T1 and the second color temperature T2 in step S460. In step S460, when the controller 120 determines the global color temperature CCT_O falls between the first color temperature T1 and the second color temperature T2, the controller 120 performs the weighting operation for the global color temperature CCT_O and the local color temperature CCT_I by using the weighting formula, so as to obtain the operation result for adjusting the color temperature of the illumination source in step S440. Alternatively, in step S460, when the controller 120 determines that the global color temperature CCT_O is greater than the first color temperature T1 or less than the second color temperature T2, the controller 120 adjusts the color temperature of the illumination source according to at least one of a preset color temperature, a user parameter, a scenario parameter and a location parameter in step S450.

On the other hand, in step S430, when the controller 120 determines that the operation time of the lighting apparatus 100 of adjustable color temperature falls within a second time interval, the controller 120 adjusts the color temperature of the illumination source according to at least one of a preset color temperature, a user parameter, a scenario parameter and a location parameter in step S450.

In addition, sufficient teaching, suggestion, and implementation illustration regarding the method for adjusting color temperature of the exemplary embodiment may be obtained from the above embodiments depicted in FIG. 1 to FIG. 5, and thus related description thereof is not repeated hereinafter.

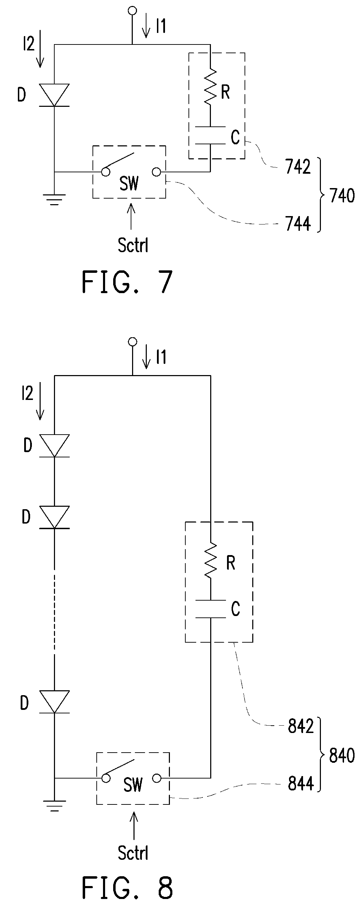

In the embodiment of FIG. 2, for example, the controller 120 outputs the control signal Sctrl to control the color temperature compensation circuit 140 to adjust the color temperature of the illumination source. FIG. 7 illustrates a schematic diagram of a color temperature compensation circuit according to an exemplary embodiment of the invention. Referring to FIG. 2 and FIG. 7, a color temperature compensation circuit 740 of the exemplary embodiment includes a compensation element module 742 and a switch element module 744. The switch element module 744 is coupled between the compensation element module 742 and an organic light-emitting diode D. The compensation element module 742 generates different impedance values according to different AC frequencies, and whether the switch element module 744 is turned on or not turned on may change a bypass current state of the driving current I1, namely, change an intensity of the driving current I2. In the exemplary embodiment, the compensation element module 742 includes a group of a resistor R and a capacitor C coupled in series. The switch element module 744 includes a switch element SW. The controller 120 controls the switch element SW of the switch element module 744 by the control signal Sctrl, so as to select to turn-on or not to turn-on the switch element SW to adjust the color temperature of the illumination source.

In the exemplary embodiment, the light source driving circuit 150 is configured to output the driving current I1 to the color temperature compensation circuit 140, so as to use the bypass current (i.e., the driving current I2) to drive the organic light-emitting diode D of the luminescent source 110 to provide the illumination source. The controller 120 controls the switch element SW to be turned on or not be turned on by the control signal Sctrl to adjust the intensity of the driving current I2 flowed into the organic light-emitting diode D, so as to adjust the color temperature of the illumination source. In the exemplary embodiment, although a cathode of the organic light-emitting diode D coupled to a ground voltage is used as an example for description, the invention is not limited thereto. In other embodiments, the cathode of the organic light-emitting diode D may also be coupled to a negative voltage with is relatively low in the system. In the exemplary embodiment, when the switch element SW is turned on, a driving load of the light source driving circuit 150 includes the group of the resistor R and the capacitor C coupled in series and coupled in parallel with the organic light-emitting diode D. When the switch element SW is not turned on, the driving load of the light source driving circuit 150 includes the organic light-emitting diode D. In the two states where the switch element SW is turned on or not turned on, because the driving loads of the light source driving circuits 150 are not identical, the bypass current state of the driving current I1 (i.e., the intensity of the driving current I2) may be adjusted based on different electrical impedances of the driving loads, such that the color temperature of the illumination source is also changed accordingly. In the exemplary embodiment, the controller 120 controls the switch element SW to be turned on to decrease the color temperature of the illumination source. The controller 120 controls the switch element SW not to be turned on to increase the color temperature of the illumination source.

FIG. 8 illustrates a schematic diagram of a color temperature compensation circuit according to another exemplary embodiment of the invention. Referring to FIG. 7 and FIG. 8, a color temperature compensation circuit 840 of the exemplary embodiment is similar to the color temperature compensation circuit 740 of FIG. 7, and a major difference between the two is that, what coupled in parallel with to the compensation element module 742 is an organic light-emitting diode string that includes a plurality of organic light-emitting diodes D connected in series. In the exemplary embodiment, the controller 120 controls the switch element SW to be turned on or not to be turned on by the control signal Sctrl to adjust the color temperature of the illumination source. Sufficient teaching, suggestion, and implementation illustration regarding an operating method of the color temperature compensation circuit 840 of the exemplary embodiment may be obtained from the embodiment depicted in FIG. 7, and thus related description thereof is not repeated hereinafter.

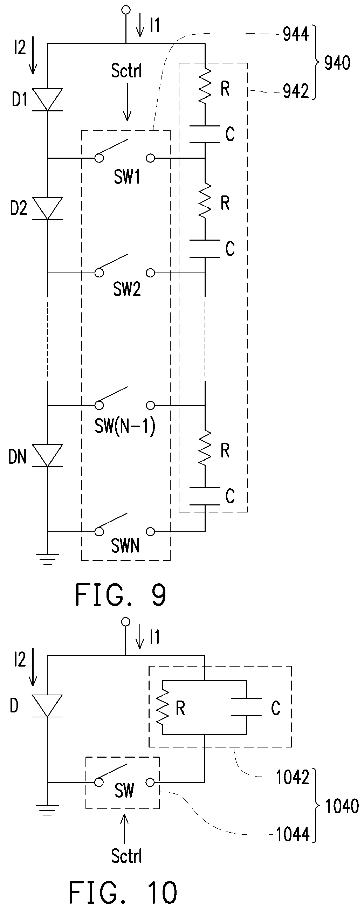

FIG. 9 illustrates a schematic diagram of a color temperature compensation circuit according to another exemplary embodiment of the invention. Referring to FIG. 7 and FIG. 9, a color temperature compensation circuit 940 of the exemplary embodiment is similar to the color temperature compensation circuit 740 of FIG. 7, and major differences between the two are provided as follows.

In the exemplary embodiment, a compensation element module 942 includes multiple groups of the resistor R and the capacitor C coupled in series. The switch element module 944 includes a plurality of switch elements SW1 to SWN coupled in parallel. In this example, each of a plurality of organic light-emitting diodes D1 to DN of the organic light-emitting diode string is disposed with one group of the resistor R and the capacitor C coupled in series. The controller 120 controls the switch elements SW1 to SWN to be turned on or not to be turned on by the control signal Sctrl. For instance, there can be various configurations based on whether each of the switch elements SW1 to SWN is turned on or not turned on. For instance, when all the switch elements SW1 to SWN are not turned on, the driving current I1 is not flowed into the compensation element module 942 but served entirely as the driving current I2 to drive the organic light-emitting diodes D1 to DN. When the switch element SW1 is turned on while the switch elements SW2 to SWN are not turned on, the organic light-emitting diode D1 forms a parallel configuration with a first group of the resistor R and the capacitor C coupled in series, so as to adjust the intensity of the driving current I2 flowed into the organic light-emitting diode D1. The other organic light-emitting diodes D2 to DN coupled in series form another parallel configuration with the other groups of the resistor R and the capacitor C coupled in series. The other combinations regarding whether the switch elements SW1 to SWN are turned on or not turned on may be deduced by analogy, which are omitted hereinafter. Therefore, in the exemplary embodiment, one or more switch elements among the switch elements SW1 to SWN may be turned on or not turned on at the same time to adjust the color temperature of the illumination source, which are not particularly limited in the invention. In addition, sufficient teaching, suggestion, and implementation illustration regarding an operating method of the color temperature compensation circuit 940 of the exemplary embodiment may be obtained from the embodiment depicted in FIG. 7, and thus related description thereof is not repeated hereinafter.

FIG. 10 illustrates a schematic diagram of a color temperature compensation circuit according to another exemplary embodiment of the invention. Referring to FIG. 7 and FIG. 10, a color temperature compensation circuit 1040 of the exemplary embodiment is similar to the color temperature compensation circuit 740 of FIG. 7, and a major difference between the two is that, the color temperature compensation circuit 1040 includes the group of the resistor R and the capacitor C connected in parallel. In the exemplary embodiment, the controller 120 controls the switch element SW to be turned on or not to be turned on by the control signal Sctrl to adjust the color temperature of the illumination source. In addition, sufficient teaching, suggestion, and implementation illustration regarding an operating method of the color temperature compensation circuit 1040 of the exemplary embodiment may be obtained from the embodiment depicted in FIG. 7, and thus related description thereof is not repeated hereinafter.

In the exemplary embodiments of FIG. 7 and FIG. 10, the compensation element modules are illustrated as a combination of two elements including the resistor and the capacitor connected in series or connected in parallel, but the invention is not limited thereto. In other exemplary embodiments, the compensation element module includes, for example, a combination of two elements including a capacitor and an inductor connected in series or connected in parallel, so as to reduce power consumption of the compensation element module.

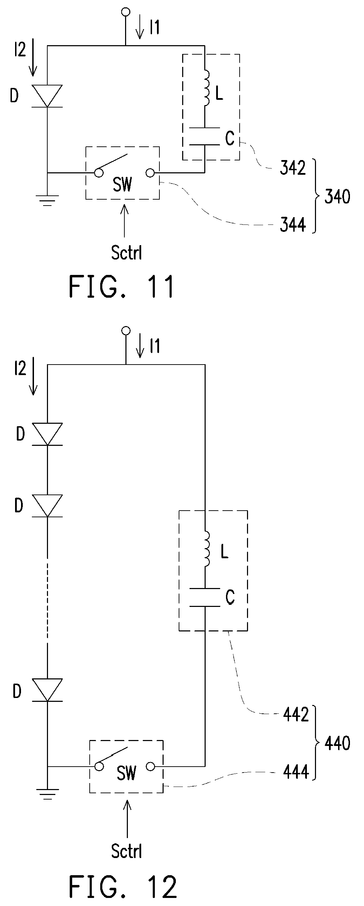

FIG. 11 to FIG. 14 illustrates schematic diagrams of color temperature compensation circuits according to different exemplary embodiments of the invention.

In the exemplary embodiment of FIG. 11, a compensation element module 342 includes a group of an inductor L and a capacitor C coupled in series. The switch element module 344 includes a switch element SW. The controller 120 controls the switch element SW of the switch element module 344 by the control signal Sctrl, so as to select to turn-on or not to turn-on the switch element SW to adjust the color temperature of the illumination source.

In the exemplary embodiment of FIG. 12, a compensation element module 442 includes a group of an inductor L and a capacitor C coupled in series. What coupled in parallel with the compensation element module 442 is an organic light-emitting diode string which includes a plurality of organic light-emitting diodes D coupled in series. In the exemplary embodiment, the controller 120 controls the switch element SW to be turned on or not to be turned on by the control signal Sctrl to adjust the color temperature of the illumination source.

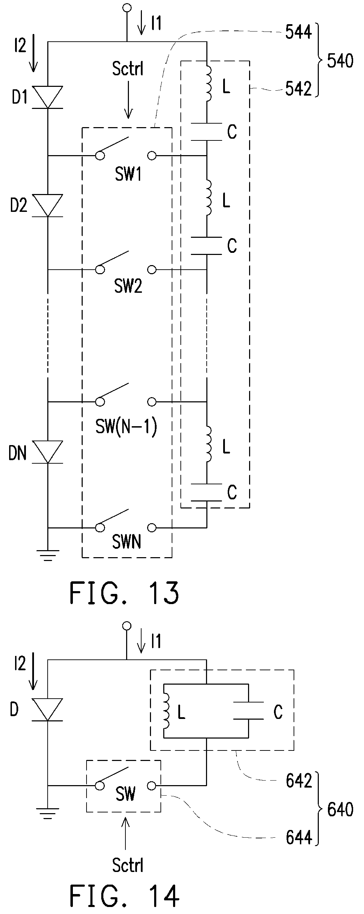

In the exemplary embodiment of FIG. 13, a compensation element module 942 includes multiple groups of the inductor L and the capacitor C coupled in series. The switch element module 744 includes a plurality of switch elements SW1 to SWN coupled in parallel. In this example, each of organic light-emitting diodes D1 to DN of the organic light-emitting diode string is disposed with one group of the inductor L and the capacitor C coupled in series. The controller 120 controls the switch elements SW1 to SWN to be turned on or not to be turned on by the control signal Sctrl to adjust the color temperature of the illumination source.

In the exemplary embodiment of FIG. 14, a compensation element module 642 includes a group of the inductor L and the capacitor C coupled in parallel. The switch element module 644 includes a switch element SW. The controller 120 controls the switch element SW of the switch element module 644 by the control signal Sctrl, so as to select to turn-on or not to turn-on the switch element SW to adjust the color temperature of the illumination source.

In addition, sufficient teaching, suggestion, and implementation illustration regarding operating methods of the color temperature compensation circuits of the exemplary embodiments depicted in FIG. 11 to FIG. 14 may be obtained from the embodiments depicted in FIG. 7 to FIG. 10, and thus related description thereof is not repeated hereinafter.

In the exemplary embodiments of FIG. 11 and FIG. 14 among the exemplary embodiments of the invention, the compensation element modules are illustrated as the combination of two elements including the inductor and the capacitor connected in series or connected in parallel, but the invention is not limited thereto. In other exemplary embodiments, for example, the compensation element module includes a combination of at least two elements among a resistor, a capacitor and an inductor, which are connected in series or connected in parallel. Sufficient teaching, suggestion, and implementation illustration regarding operating methods of the color temperature compensation circuit including different combinations of the resistor, the capacitor and the inductor may be obtained from the embodiments depicted in FIG. 7 to FIG. 14, and thus related description thereof is not repeated hereinafter.

Further, in the exemplary embodiments of the invention, the method for adjusting color temperature detects the color temperature of the luminescent source 110 by using the detector 130. The controller 120 controls the switches (e.g., those illustrated in FIG. 7 to FIG. 11) of the color temperature compensation circuit 140 according to a detection result of the detector 130 to compensate the color temperature of the luminescent source 110. Accordingly, in the exemplary embodiments of the invention, the light source driving circuit 150 includes, for example, a driving circuit for driving a light-emitting diode light source, an organic light-emitting diode light source or other similar light sources. The light source driving circuit 150 may also be designed to include a current detector, which is configured to detect a feedback current of the luminescent source 110. The light source driving circuit 150 may transmit a feedback message to the controller 120 so as to perform a color temperature compensation.

In summary, according to the exemplary embodiments of the invention, with respect to the weighting operation, the local color temperature is mainly the color temperature of the location of the lighting apparatus of adjustable color temperature detected by using the detector, which may be used to compensate the color temperature of the illumination source. The global color temperature is mainly the color temperature data collected from the cloud database. The controller performs the weighting operation for the global color temperature and the local color temperature to obtain the operation result for adjusting the color temperature of the illumination source. With respect to the circuit structure, the combination of at least two elements among the resistor, the capacitor and the inductor is connected in parallel with the organic light-emitting diode to serve as the color temperature compensation circuit. The controller controls the color temperature compensation circuit according to the operation result of the weighting operation performed for the global color temperature and the local color temperature, so as to adjust the color temperature of the illumination source.

**Claims**

1. A lighting apparatus (100) of adjustable color temperature, comprising:

    a luminescent source (110), configured to provide an illumination source;
    a controller (120), coupled to the luminescent source (110), and configured to adjust a color temperature of the illumination source according to at least one of a global color temperature (CCT_O) and a local color temperature (CCT_I); and
    a detector (130), coupled to the controller (120), and configured to detect a color temperature of a location of the lighting apparatus (100) of adjustable color temperature, so as to provide the local color temperature (CCT_I) to the controller (120),
    wherein the controller (120) performs a weighting operation for the global color temperature (CCT_O) and the local color temperature (CCT_I) to obtain an operation result for adjusting the color temperature of the illumination source.

2. The lighting apparatus (100) of adjustable color temperature of claim 1, further comprising:

    a color temperature compensation circuit (140, 340, 440, 540, 640, 740, 840, 940, 1040), coupled to the luminescent source (110) and the controller (120), and configured to adjust the color temperature of the illumination source,
    wherein the controller (120) outputs a control signal (Sctrl) to control the color temperature compensation circuit (140, 340, 440, 540, 640, 740, 840, 940, 1040) to adjust the color temperature of the illumination source.

3. The lighting apparatus (100) of adjustable color temperature of claim 2, wherein the luminescent source (110) comprises one or more organic light-emitting diodes (D, D1, D2, DN), and the color temperature compensation circuit (140, 340, 440, 540, 640, 740, 840, 940, 1040) comprises:

    a compensation element module (342, 442, 542, 642, 742, 842, 942, 1042), coupled to the one or more organic light-emitting diodes (D, D1, D2, DN), and configured to adjust the color temperature of the illumination source; and
    a switch element module (344, 444, 544, 644, 744, 844, 944, 1044), coupled between the compensation element module (342, 442, 542, 642, 742, 842, 942, 1042) and the one or more organic light-emitting diodes (D, D1, D2, DN),
    wherein the controller (120) controls the switch element module (344, 444, 544, 644, 744, 844, 944, 1044) to be turned on or not be turned on by the control signal (Sctrl) to determine an impedance value of the compensation element module (342, 442, 542, 642, 742, 842, 942, 1042), so as to adjust the color temperature of the illumination source.

4. The lighting apparatus (100) of adjustable color temperature of claim 3, wherein the controller (120) controls the switch element module (344, 444, 544, 644, 744, 844, 944, 1044) to be turned on to decrease the color temperature of the illumination source, and the controller (120) controls the switch element module (344, 444, 544, 644, 744, 844, 944, 1044) not to be turned on to increase the color temperature of the illumination source.

5. The lighting apparatus (100) of adjustable color temperature of claim 3, wherein the compensation element module (342, 442, 542, 642, 742, 842, 942, 1042) comprises a combination of at least two elements among a resistor (R), a capacitor (C) and an inductor (L), which are connected in series or connected in parallel.

6. The lighting apparatus (100) of adjustable color temperature of claim 3, wherein the one or more organic light-emitting diodes (D, D1, D2, DN) are driven by a driving current (I1, I2) to provide the illumination source, and the controller (120) controls the switch element module (344, 444, 544, 644, 744, 844, 944, 1044) to be turned on or not be turned on by the control signal (Sctrl) to adjust an intensity of the driving current (I1, I2) flowed into the luminescent source (110), so as to adjust the color temperature of the illumination source.

7. The lighting apparatus (100) of adjustable color temperature of claim 6, further comprising:

a light source driving circuit (150), coupled to the color temperature compensation circuit (140, 340, 440, 540, 640, 740, 840, 940, 1040), and configured to output the driving current (I1, I2) to the color temperature compensation circuit (140, 340, 440, 540, 640, 740, 840, 940, 1040) to drive the one or more organic light-emitting diodes (D, D1, D2, DN) to provide the illumination source.

8. The lighting apparatus (100) of adjustable color temperature of claim 1, wherein the controller (120) performs the weighting operation for the global color temperature (CCT_O) and the local color temperature (CCT_I) by a weighting formula,
wherein the weighting formula comprises a combination of mathematical operations involving a first weighting function, a second weighting function, the global color temperature (CCT_O) and the local color temperature (CCT_I).

9. The lighting apparatus (100) of adjustable color temperature of claim 8, wherein the first weighting function is determined according to at least one of the second weighting function, a constant, a color coordinate transformation matrix, a time parameter (St), a user parameter, a scenario parameter and a location parameter, and the second weighting function is determined according to at least one of the first weighting function, the constant, the color coordinate transformation matrix, the time parameter (St), the user parameter, the scenario parameter and the location parameter.

10. The lighting apparatus (100) of adjustable color temperature of claim 8, wherein the controller (120) receives the global color temperature (CCT_O) from a cloud database (200), and the controller (120) determines a color temperature range of the global color temperature (CCT_O) according to a first color temperature (T1) and a second color temperature (T2).

11. The lighting apparatus (100) of adjustable color temperature of claim 10, wherein the controller (120) performs the weighting operation for the global color temperature (CCT_O) and the local color temperature (CCT_I) by the weighting formula when the global color temperature (CCT_O) falls between the first color temperature (T1) and the second color temperature (T2), so as to obtain the operation result for adjusting the color temperature of the illumination source.

12. The lighting apparatus (100) of adjustable color temperature of claim 11, wherein the controller (120) adjusts the color temperature of the illumination source according to at least one of a preset color temperature, a user parameter, a scenario parameter and a location parameter when the global color temperature (CCT_O) is greater than the first color temperature (T1) or less than the second color temperature (T2).

13. The lighting apparatus (100) of adjustable color temperature of claim 1, wherein the controller (120) receives a time parameter (St) from the cloud database (200) to determine an operation time of the lighting apparatus (100) of adjustable color temperature, and when the controller (120) determines that the operation time of the lighting apparatus (100) of adjustable color temperature falls within a first time interval, the controller (120) performs the weighting operation for the global color temperature (CCT_O) and the local color temperature (CCT_I) to obtain the operation result for adjusting the color temperature of the illumination source.

14. The lighting apparatus (100) of adjustable color temperature of claim 13, wherein when the controller (120) determines that the operation time of the lighting apparatus (100) of adjustable color temperature falls within a second time interval, the controller (120) adjusts the color temperature of the illumination source according to at least one of a preset color temperature, a user parameter, a scenario parameter and a location parameter.

15. A method for adjusting color temperature, configured to adjust a color temperature of an illumination source provided by a lighting apparatus (100) of adjustable color temperature, and comprising:

receiving a global color temperature (CCT_O) from a cloud database (200);
detecting a color temperature of a location of the lighting apparatus (100) of adjustable color temperature by a detector (130) to obtain a local color temperature (CCT_I); and
adjusting the color temperature of the illumination source according to at least one of the global color temperature (CCT_O) and the local color temperature (CCT_I),
wherein the step of adjusting the color temperature of the illumination source according to the at least one of the global color temperature (CCT_O) and the local color temperature (CCT_I) comprises:

performing a weighting operation for the global color temperature (CCT_O) and the local color temperature (CCT_I) to obtain an operation result for adjusting the color temperature of the illumination source.

16. The method for adjusting color temperature of claim 15, wherein the step of adjusting the color temperature of the illumination source according to the at least one of the global color temperature (CCT_O) and the local color temperature (CCT_I) comprises:

outputting a control signal (Sctrl) to control a color temperature compensation circuit (140, 340, 440, 540, 640, 740, 840, 940, 1040) to adjust the color temperature of the illumination source.

17. The method for adjusting color temperature of claim 16, wherein the lighting apparatus (100) of adjustable color temperature comprises a luminescent source (110) configured to provide the illumination source and comprising one or more organic light-emitting diodes (D, D1, D2, DN), and the color temperature compensation circuit (140, 340, 440, 540, 640, 740, 840, 940, 1040) comprises a compensation element module (342, 442, 542, 642, 742, 842, 942, 1042) and a switch element module (344, 444, 544, 644, 744, 844, 944, 1044), wherein the step of outputting the control signal (Sctrl) to control the color temperature compensation circuit (140, 340, 440, 540, 640, 740, 840, 940, 1040) to adjust the color temperature of the illumination source comprises:

controlling the switch element module (344, 444, 544, 644, 744, 844, 944, 1044) to be turned on or not to be turned on, wherein the compensation element module (342, 442, 542, 642, 742, 842, 942, 1042) is coupled to the one or more organic light-emitting diodes (D, D1, D2, DN) through the switch element module (344, 444, 544, 644, 744, 844, 944, 1044).

18. The method for adjusting color temperature of claim 17, wherein the step of controlling the switch element module (344, 444, 544, 644, 744, 844, 944, 1044) to be turned on or not to be turned on comprises: controlling the switch element module (344, 444, 544, 644, 744, 844, 944, 1044) to be turned on to decrease the color temperature of the illumination source, or controlling the switch element module (344, 444, 544, 644, 744, 844, 944, 1044) not to be turned on to increase the color temperature of the illumination source.

19. The method for adjusting color temperature of claim 17, wherein the compensation element module (342, 442, 542, 642, 742, 842, 942, 1042) comprises a combination of at least two elements among a resistor (R), a capacitor (C) and an inductor (L), which are connected in series or connected in parallel.

20. The method for adjusting color temperature of claim 17, wherein the one or more organic light-emitting diodes (D, D1, D2, DN) are driven by a driving current (I1, I2) to provide the illumination source, the step of controlling the switch element module (344, 444, 544, 644, 744, 844, 944, 1044) to be turned on or not to be turned on comprises: controlling the switch element module (344, 444, 544, 644, 744, 844, 944, 1044) to be turned on or not be turned on to adjust an intensity of the driving current (I1, I2) flowed into the luminescent source (110), so as to adjust the color temperature of the illumination source.

21. The method for adjusting color temperature of claim 20, further comprising:

outputting the driving current (I1, I2) to drive the one or more organic light-emitting diodes (D, D1, D2, DN) to provide the illumination source.

**22.** The method for adjusting color temperature of claim 15, wherein the step of performing the weighting operation for the global color temperature (CCT_O) and the local color temperature (CCT_I) comprises:

performing the weighting operation for the global color temperature (CCT_O) and the local color temperature (CCT_I) by a weighting formula, wherein the weighting formula comprises a combination of mathematical operations involving a first weighting function, a second weighting function, the global color temperature (CCT_O) and the local color temperature (CCT_I).

**23.** The method for adjusting color temperature of claim 22, wherein the first weighting function is determined according to at least one of the second weighting function, a constant, a color coordinate transformation matrix, a time parameter (St), a user parameter, a scenario parameter and a location parameter, and the second weighting function is determined according to at least one of the first weighting function, the constant, the color coordinate transformation matrix, the time parameter (St), the user parameter, the scenario parameter and the location parameter.

**24.** The method for adjusting color temperature of claim 22, further comprising:

determining a color temperature range of the global color temperature (CCT_O) according to a first color temperature (T1) and a second color temperature (T2).

**25.** The method for adjusting color temperature of claim 24, wherein the step of performing the weighting operation for the global color temperature (CCT_O) and the local color temperature (CCT_I) by the weighting formula comprises: performing the weighting operation for the global color temperature (CCT_O) and the local color temperature (CCT_I) by the weighting formula when the global color temperature (CCT_O) falls between the first color temperature (T1) and the second color temperature (T2).

**26.** The method for adjusting color temperature of claim 25, further comprising:

adjusting the color temperature of the illumination source according to at least one of a preset color temperature, a user parameter, a scenario parameter and a location parameter when the global color temperature (CCT_O) is greater than the first color temperature (T1) or less than the second color temperature (T2).

**27.** The method for adjusting color temperature of claim 15, further comprising:

receiving a time parameter (St) from the cloud database (200) to determine an operation time of the lighting apparatus (100) of adjustable color temperature,
wherein when determining that the operation time of the lighting apparatus (100) of adjustable color temperature falls within a first time interval, performing the weighting operation for the global color temperature (CCT_O) and the local color temperature (CCT_I) to obtain the operation result for adjusting the color temperature of the illumination source.

**28.** The method for adjusting color temperature of claim 27, wherein when determining that the operation time of the lighting apparatus (100) of adjustable color temperature falls within a second time interval, adjusting the color temperature of the illumination source according to at least one of a preset color temperature, a user parameter, a scenario parameter and a location parameter.

FIG. 1

FIG. 2

Receiving data of a global color
temperature CCT_O from a cloud database ⟋ S110

Detecting a color temperature of a
location of a lighting apparatus of
adjustable color temperature by a detector
to obtain a local color temperature CCT_I ⟋ S120

Adjusting a color temperature of an
illumination source according to at least
one of the global color temperature CCT_O
and the local color temperature CCT_I ⟋ S130

# FIG. 3

Receiving data of the global
color temperature CCT_O
and a time parameter St
from the cloud database ⟋ S210

Receiving data of
the local color
temperature CCT_I
from the detector ⟋ S220

Determining an
operation time of the lighting
apparatus of adjustable color emperature
according to the time
parameter St ⟋ S230

First time interval

Second time interval

Performing the weighting operation for
the global color temperature CCT_O and
the local color temperature CCT_I by the
weighting formula, so as to obtain the
operation result for adjusting the color
temperature of the illumination source

S240

Adjusting the color temperature
of the illumination source
according to at least one of a
preset color temperature, a user
parameter, a scenario parameter
and a location parameter

S250

# FIG. 4

Receiving data of the global color temperature CCT_O and a time parameter St from the cloud database — S310

Receiving data of the local color temperature CCT_I from the detector — S320

Determining a color temperature range of the global color temperature CCT_O according to a first color temperature T1 and a second color temperature T2 — S330

T2≤CCT_O≤T1

CCT_O>T1 or CCT_O<T2 — S350

Performing the weighting operation for the global color temperature CCT_O and the local color temperature CCT_I by the weighting formula, so as to obtain the operation result for adjusting the color temperature of the illumination source — S340

Adjusting the color temperature of the illumination source according to at least one of a preset color temperature, a user parameter, a scenario parameter and a location parameter

FIG. 5

S410

Receiving data of the global color temperature CCT_0 and a time parameter St from the cloud database

S420

Receiving data of the local color temperature CCT_I from the detector

S430

Determining an operation time of the lighting apparatus of adjustable color temperature according to the time parameter St

First time interval

Second time interval

S460

Determining a color temperature range of the global color temperature CCT_0 according to a first color temperature T1 and a second color temperature T2

CCT_0>T1 or CCT_0<T2

T2≤CCT_0≤T1

Performing the weighting operation for the global color temperature CCT_0 and the local color temperature CCT_I by the weighting formula, so as to obtain the operation result for adjusting the color temperature of the illumination source

S440

S450

Adjusting the color temperature of the illumination source according to at least one of a preset color temperature, a user parameter, a scenario parameter and a location parameter

FIG. 6

FIG. 7

FIG. 8

FIG. 9

FIG. 10

FIG. 11

FIG. 12

FIG. 13

FIG. 14

Europäisches
Patentamt

European
Patent Office

Office européen
des brevets

# EUROPEAN SEARCH REPORT

Application Number

EP 16 15 7583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/022784 A1 (OSRAM SYLVANIA INC [US]; ADLER HELMAR [US]) 14 February 2013 (2013-02-14) * the whole document * ----- | 1-28 | INV. H05B33/08 H05B37/02 |
| A | US 2012/001558 A1 (VOS MARTIN J [US]) 5 January 2012 (2012-01-05) * the whole document * ----- | 1-28 | |

TECHNICAL FIELDS
SEARCHED (IPC)

H05B

The present search report has been drawn up for all claims

| Place of search | Date of completion of the search | Examiner |
|---|---|---|
| Munich | 11 November 2016 | Burchielli, M |

EPO FORM 1503 03.82 (P04C01)

## ANNEX TO THE EUROPEAN SEARCH REPORT
## ON EUROPEAN PATENT APPLICATION NO.

EP 16 15 7583

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2016

| Patent document cited in search report | Publication date | Patent family member(s) | Publication date |
|---|---|---|---|
| WO 2013022784 A1 | 14-02-2013 | CN 103717964 A | 09-04-2014 |
| | | EP 2739903 A1 | 11-06-2014 |
| | | JP 2014526123 A | 02-10-2014 |
| | | US 2012306381 A1 | 06-12-2012 |
| | | US 2014320024 A1 | 30-10-2014 |
| | | WO 2013022784 A1 | 14-02-2013 |
| US 2012001558 A1 | 05-01-2012 | CN 102972097 A | 13-03-2013 |
| | | EP 2589268 A1 | 08-05-2013 |
| | | JP 2013534035 A | 29-08-2013 |
| | | KR 20130088140 A | 07-08-2013 |
| | | TW 201208488 A | 16-02-2012 |
| | | US 2012001558 A1 | 05-01-2012 |
| | | WO 2012003119 A1 | 05-01-2012 |

EPO FORM P0459

For more details about this annex : see Official Journal of the European Patent Office, No. 12/82